# EUROPEAN PATENT APPLICATION

(11) **EP 1 956 517 A1**
(43) Date of publication of application: **13.08.2008**
(21) Application number: 07101891.5
(22) Date of filing: 07.02.2007
(51) Int. Cl.: G06K 9/20

(54) **Computer assisted method for processing accounting operations and software product for implementing such method**

(71) Applicant: WinBooks s.a., 1348 Louvain La Neuve (BE)
(72) Inventor: De Preter, Pierre, 1332 Genval (BE)
(74) Representative: Leherte, Georges M.L.M.

(57) **Abstract**

The invention relates to a computer assisted method for processing accounting operations, comprising recording a plurality of relevant accounting data from incoming invoices into appropriate memory fields of a processing software for said method and integrating said data in the accounts processed by the method, whereas said recording of a plurality of relevant accounting data from an incoming invoice is carried out automatically, based on a digital scan of said invoice, by means of preset template masks applied to said scan or by means of format recognizing software, wherein said automatic recording of a plurality of relevant accounting data from a digital scan of said invoice is carried out by means of a set of interactively generated template masks applied to said scan and by means of format recognizing software,
and to a software product for implementing such method.

## Description

The invention relates to the area of Optical Character Recognition (OCR) as well as to the area of computer assisted accounting processes / methods ("accounting software"), which more and more tend to incorporate such OCR capability.

In the OCR state of the art, two approaches appear to co-exist :
on the one hand the so called "Layout Based" approach, linked to specific layouts of the documents to be processed, which forces the user to take action, at an initial stage of the method, in a long and fastidious "learning phase" to generate, for the various suppliers, the invoice templates / masks-collection of rectangles with appropriate zone positions;
   and
on the other hand the so called "FreeForm Based" approach, which dives into the document and uses "artificial intelligence" techniques to extract the required accounting elements / relevant data for accounting operations (referred to as the "relevant accounting data") from the invoices, in function of inter-relations between and/or structures of the various elements; in this type of recognition methods there is a maximum to the recognition levels due to "exotic" invoices (involving non-standard arrangements, vertical notes and headings, etc.).

It is the objective of the present invention to provide an improved method for processing accounting operations which avoids a number of drawbacks of the state of the art methods and which at the same time provides several further advantages.

To meet this objective the invention provides a computer assisted method for processing accounting operations, comprising recording a plurality of relevant accounting data from incoming invoices into appropriate memory fields of a processing software for said method and integrating said data in the accounts processed by the method, wherein said recording of a plurality of relevant accounting data from an incoming invoice is carried out automatically, based on a digital scan of said invoice, by means of preset template masks applied to said scan or by means of format recognizing software, whereas said automatic recording of a plurality of relevant accounting data from a digital scan of said invoice is carried out by means of a set of interactively generated template masks applied to said scan and by means of format recognizing software.

It is indeed an essential feature of the invention to combine the performance of a 'preset template mask'-type method (so called Layout Based method) and a 'format recognizing'-type method (so called FreeForm method) for recognizing relevant data for accounting operations, from any type of invoices.
The combination and integration of these two types of methods has been found to involve a synergetic effect and to provide far superior recognition levels compared to those obtained by each method separately.

A further important feature of the invention relates to the continuous recording / memorizing of improvements / new templates as they are being generated by the not 'layout-based' part of the method according to the invention, in order to generate / expand a database / library of templates.
This allows for a continuously improving performance and recognition level of the method according to the invention, referred to as the intelligence / learning property of the method.

Still a further important feature of the invention relates to a sharing of such database / library between a maximum of users, most suitably via Internet, in order to achieve, the fastest possible, most complete, increasing number of significant templates / suppliers cq. supplier- linked templates.
Definitions of new templates are shared between all users of the system through a internet database.

Each of these approaches as well as their association in one combined system must be regarded as pioneering in the areas of
- electronic management / dematerialization of administrative documents;
- Automatic Invoice Reading ("AIR", or "LAF" in French); and
- the IT world in general.

Whereas known programs provide the user with an imposed exhaustive and rather "heavy" definition of a mask, the method according to the present invention continuously records the improvements made by the user.

In a specific embodiment of the invention, the method for processing accounting operations thus preferably comprises software coordinating said format recognizing software with said template mask means to interactively generate new template masks and expand said set of template masks.

According to a further preferred feature the method may thus also involve means to perform Transmission Control Protocol - Internet Protocol exchanges (TCP-IP exchanges) with a dedicated server managing a central database of template masks, whereas, most preferably, said central database of template masks may involve a classification based on one or more typical parameters of invoice emitters ("suppliers"), such as in particular a classification based on invoice emitters' VAT n°, bank account n° and / or company n°.

In its preferred embodiments the method according to the invention offers the following capabilities :
when an invoice zone is inadequately recognized, the user has just to pass over that zone with the mouse, to click and simply indicate to the program which type of zone is involved:
   the method according to the invention will then complete the database of invoice masks, with the position of the zone on the invoice;
   next time the method according to the invention will be able to extract correctly said zone at the specified position;
   this database / library of masks is thus supplied in an interactive manner by the users of the method.
   In a multi-user environment, such as an accountant office, the library of masks can be shared by the individual users :
   when one user improves the mask of a supplier, this information is immediately available and re-calculated in real time for the other users working on another file.

A particularly innovative aspect of the method according to the invention is to share this library of masks at the level of all users, via a database accessible on Internet.
In such a way each user will bring his contribution to the community an will receive in return the masks as defined by the other users.
In this way the recognition rate should increase very rapidly and reach its peaks as soon as the library of masks starts to cover a significant number of suppliers.

The invention also specifically covers software products for processing accounting operations, comprising software means for automatically recording specific data from incoming invoices into appropriate memory fields, based on a digital scan of said invoice, wherein said software means comprise preset template masks capable to be applied to said scan or software means capable of recognising the format of specific data in such scan, and wherein said automatic recording software means comprise a set of interactively generated template masks capable to be applied to said scan and software means capable to recognise the format of specific data.

In a preferred embodiment of the software product according to the invention, said software product most appropriately comprises software means capable to coordinate said format recognizing software with said set of template mask to interactively generate new template masks and expand said set of template masks.

According to a further preferred feature of the software product according to the invention, the software product comprises TCP-IP software means capable to perform exchanges with a dedicated server managing a central database of template masks.
More preferably said means to perform exchanges with the central database of template masks involve the use of one or more typical parameters of invoice emitters ("suppliers"), such as, most preferably an invoice emitters' VAT n°, bank account n° and / or company n°.

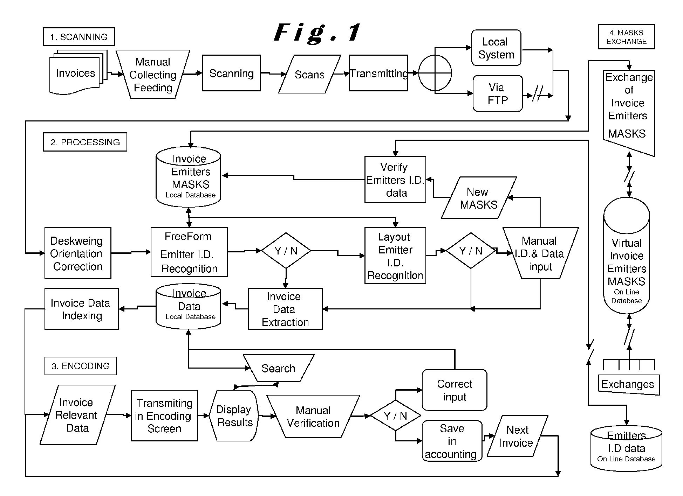

Further features and details of the invention will become apparent from the description of a preferred embodiment of the invention given here below, having reference to the attached tables, in which
Figure 1 shows a detailed organigram for implementing the method according to the invention, and
Figure 2 shows a convenient structure for a masks database for the method according to the invention

The working principles of this specific example of the method according to the invention involve the following aspects :
In a first exploration step the "identifier" (identification parameter) of the invoice generator (the "supplier") is found (VAT number, bank account number, or any optional additional "key" defined by the user.
On the basis of this number the masks database is scanned for extracting any mask already defined for this supplier.
If necessary the mask is applied to the invoice with any required adjustments, due, for instance, to any shifts that may have occurred during scanning (so called "deskewing").
It is during update procedures of the used software version (as known per se for this kind of programs), that the user not only receives, inter alia, the newest version of the freeform script, but also the masks that have been interactively elaborated by the other users.

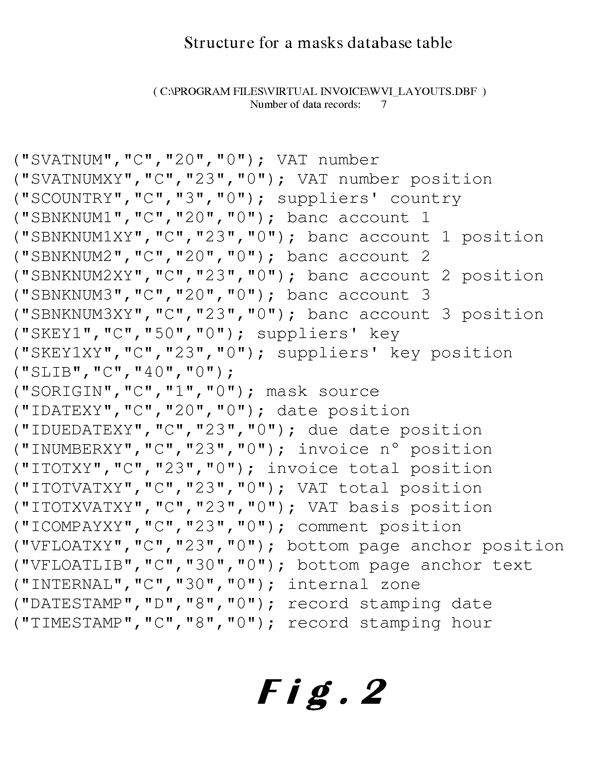

An example of a preferred structure for a database of masks is given in the attached figure 2

## Claims

1. Computer assisted method for processing accounting operations, comprising recording a plurality of relevant accounting data from incoming invoices into appropriate memory fields of a processing software for said method and integrating said data in the accounts processed by the method, wherein said recording of a plurality of relevant accounting data from an incoming invoice is carried out automatically, based on a digital scan of said invoice, by means of preset template masks applied to said scan or by means of format recognizing software, **characterised in that** said automatic recording of a plurality of relevant accounting data from a digital scan of said invoice is carried out by means of a set of interactively generated template masks applied to said scan and by means of format recognizing software.

2. Computer assisted accounting method according to claim 1, charcterised in that said method comprises software coordinating said format recognizing software with said template mask means to interactively generate new template masks and expand said set of template masks.

3. Computer assisted accounting method according to any one of claims 1 and 2, charcterised in that said method involves means to perform TCP-IP exchanges with a dedicated server managing a central database of template masks.

4. Computer assisted accounting method according to claim 3, charcterised in that said central database of template masks involves a classification based on one or more typical parameters of invoice emitters ("suppliers").

5. Computer assisted accounting method according to claim 4, charcterised in that said central database of template masks involves a classification based on invoice emitters' VAT n°, bank account n° and / or company n°.

6. Software product for processing accounting operations, comprising software means for automatically recording specific data from incoming invoices into appropriate memory fields, based on a digital scan of said invoice, wherein said software means comprise preset template masks capable to be applied to said scan or software means capable of recognising the format of specific data in such scan, **characterised in that** said automatic recording software means comprise a set of interactively generated template masks capable to be applied to said scan and software means capable to recognise the format of specific data .

7. Software product according to claim 6, charcterised in that it comprises software means capable to coordinate said format recognizing software with said set of template mask to interactively generate new template masks and expand said set of template masks.

8. Software product according to any one of claims 6 and 7, charcterised in that it comprises TCP-IP software means capable to perform exchanges with a dedicated server managing a central database of template masks.

9. Software product according to claim 8, charcterised in that said means to perform exchanges with a central database of template masks involve the use of one or more typical parameters of invoice emitters ("suppliers").

10. Software product according to claim 9, charcterised in that said parameter(s) used to perform exchanges with a central database of template masks comprise an invoice emitters' VAT n°, bank account n° and / or company n°.
